# EUROPÄISCHE PATENTSCHRIFT

(11) **EP 3 707 209 B1**
(45) Veröffentlichungstag und Bekanntmachung des Hinweises auf die Patenterteilung: **21.07.2021**
(21) Anmeldenummer: 18800108.5
(22) Anmeldetag: 07.11.2018
(51) Int. Cl.: C08L 67/00, C08L 67/02, C08L 69/00

(54) **MINERALGEFÜLLTE THERMOPLASTISCHE ZUSAMMENSETZUNG MIT GUTEN MECHANISCHEN EIGENSCHAFTEN**
MINERAL-FILLED THERMOPLASTIC COMPOSITION WITH GOOD MECHANICAL PROPERTIES
COMPOSITION THERMOPLASTIQUE À CHARGE MINÉRALE AYANT DE BONNES PROPRIÉTÉS MÉCANIQUES

(30) Priorität: 10.11.2017 EP 17200961
(43) Veröffentlichungstag der Anmeldung: 16.09.2020
(73) Patentinhaber: Covestro Intellectual Property GmbH & Co. KG, 51373 Leverkusen (DE)
(72) Erfinder: WANDNER, Derk, Erich, 51519 Odenthal (DE)
(74) Vertreter: Levpat
(86) Internationale Anmeldenummer: PCT/EP2018/080474
(87) Internationale Veröffentlichungsnummer: WO 2019/092018

(56) Entgegenhaltungen:
- EP-A1- 2 574 642
- EP-A2- 0 333 414
- EP-A2- 0 494 602

## Beschreibung

Die vorliegende Erfindung betrifft eine thermoplastische Zusammensetzung, insbesondere eine thermoplastische Polycarbonat-Zusammensetzung, zur Erzeugung einer thermoplastischen Formmasse, ein Verfahren zur Herstellung der thermoplastischen Formmasse, die Formmasse selbst, die Verwendung der Zusammensetzung oder Formmasse zur Herstellung von Formkörpern und die Formkörper selbst.

Polycarbonat-Zusammensetzungen sind seit langem bekannt und aus diesen Materialien werden für eine Vielzahl von Anwendungen Formkörper hergestellt, beispielsweise im Automobilbereich, für Schienenfahrzeuge, für den Bausektor, im Bereich Elektro/Elektronik und bei Haushaltsgeräten. Durch Variation der Menge und Art der Rezepturbestandteile lassen sich die Zusammensetzungen und damit auch die hergestellten Formkörper in weiten Bereichen hinsichtlich ihrer thermischen, rheologischen und mechanischen Eigenschaften an die Anforderungen der jeweiligen Anwendung anpassen.

Für manche Anwendungen, besonders bei dünnwandigen Bauteilen, ist die Steifigkeit von Formkörpern enthaltend Polycarbonat-Zusammensetzungen nicht ausreichend. Zur Erhöhung des Elastizitätsmoduls werden deshalb Verstärkungsstoffe wie Talk, Wollastonit oder Glasfasern zugemischt. Bei der Verwendung von mineralischen Füllstoffen auf Basis von Talk wird zwar oftmals eine nicht so deutliche Erhöhung der Steifigkeit wie beispielsweise mit Glasfasern erreicht, dafür sind aber andere Eigenschaften weniger stark verändert.
Auch bei der Verwendung von Talk als Füllstoff ergibt sich aber oftmals eine Verschlechterung der Zähigkeitseigenschaften, was wiederum durch die Zugabe von polymeren Blendpartnern mit niedrigen Glasübergangstemperaturen als elastische Komponente zumindest teilweise ausgeglichen werden kann.

Als solche Schlagzähmodifikatoren werden beispielsweise Pfropfpolymere mit einer Kern-Schale Struktur aus einem butadienhaltigen Kern und einer Pfropfhülle aus Vinyl(co)polymer eingesetzt, welche eine (Teil)Verträglichkeit des Modifikators mit dem Polycarbonat und eventuell in der Mischung enthaltenen weiteren Polymerkomponenten sicherstellen soll.

So beschreibt EP 0 315 868 A2 die Verwendung von Pfropfpolymerisaten hergestellt aus einem teilchenförmigen Dienkautschuk und einer Pfropfhülle aus Vinylmonomeren in Polycarbonat-Zusammensetzungen. Die Formmassen zeichnen sich durch eine gute Zähigkeit bei tiefen Temperaturen und eine gute Benzinbeständigkeit aus.

Es werden auch andere Arten von Elastomerkomponenten eingesetzt, die keine Kern-Schale Struktur aufweisen.

WO 2013/045544 A1 offenbart flammgeschützte PC/ABS Zusammensetzungen mit guter Schlagzähigkeit, Fließfähigkeit und Chemikalienbeständigkeit. Die Zusammensetzungen enthalten Polycarbonate, Pfropfpolymerisate und ein kautschukfreies alpha-Olefin-Terpolymer. Die Formmassen eignen sich insbesondere für dünnwandige Gehäuseteile im Elektro- und Elektronikbereich.

US 2015/0353732 A1 offenbart Zusammensetzungen enthaltend Polycarbonat und/oder Polyester, optional Schlagzähmodifikator und Flammschutzmittel sowie einen Verträglichkeitsvermittler mit einem mit Maleinsäureanhydrid funktionalisierten Polyolefin. Durch den Verträglichkeitsvermittler wird eine verbesserte Schlagzähigkeit erreicht.

WO 2013 / 045552 A1 offenbart thermoplastische Formmassen aus Polycarbonat und anorganischen Füllstoffen, die 0,01 bis 0,5 Gew.-Teile mindestens eines anhydrid-modifizierten alpha-Olefin-Terpolymers enthalten und einen hohen Grad an Steifigkeit und eine gute Zähigkeit aufweisen.

US 2014/0329948 A1 offenbart schlagzähmodifizierte und glasfaserverstärkte Polycarbonat-Zusammensetzungen mit hoher Steifigkeit und guten thermischen und rheologischen Eigenschaften in Verbindung mit guter Flammwidrigkeit. Die Zusammensetzungen enthalten Polycarbonat, Flammschutzmittel, Glasfasern und ein anhydrid-modifiziertes alpha-Olefin-Terpolymer.

WO 2015/ 189761 offenbart thermisch leitfähige thermoplastische Zusammensetzungen enthaltend eine Polymermatrix, einen chemisch reaktiven Schlagzähmodifikator und einen thermisch leitfähigen Füllstoff. Als chemisch reaktiver Schlagzähmodifikator wird ein mit Maleinsäureanhydrid gepfropftes Ethylen-Copolymer offenbart. Die Zusammensetzungen zeichnen sich durch gute thermische Leitfähigkeit und Zähigkeit aus.

EP 0 333 414 A2 offenbart Zusammensetzungen aus thermoplastischen Polyestern und einem modifizierten Olefin-Copolymer, die eine sehr gute Schlagzähigkeit aufweisen. Es kann auch Talk als Füllstoff eingesetzt werden. Beschrieben ist auch eine Zusammensetzung enthaltend Polyethylenterephthalat und ein mit einem Anhydrid funktionalisiertes Ethylen-alpha-Olefin-Copolymer. Mögliche Molekulargewichte des Olefin-Copolymers sind nicht angegeben.

Die beschriebenen füllstoffverstärkten Zusammensetzungen und Formmassen aus dem Stand der Technik zeichnen sich aber durch eine noch unzureichende Zähigkeit aus, insbesondere hinsichtlich multi-axialer Belastung, Schlagzähigkeit und Bruchdehnung im Zugversuch. Grundsätzlich könnte durch eine Erhöhung des Anteils der elastischen Komponente die Zähigkeit gesteigert werden, was in der Regel aber zu einer schlechteren Verarbeitbarkeit der Formmassen etwa im Spritzgussverfahren führt.

Es war daher wünschenswert, mineralverstärkte Zusammensetzungen bereitzustellen, die sich aufgrund einer guten Schmelzefließfähigkeit gut verarbeiten lassen und die gleichzeitig auch die Herstellung von Formkörpern mit einer guten Zähigkeit ermöglichen.

Insbesondere war es wünschenswert, mineralverstärkte Zusammensetzungen bereitzustellen, die sich durch eine hohe Schlagzähigkeit, eine hohe Maximalkraft und Gesamtenergie im Durchstoßversuch, eine hohe Bruchdehnung und einem hohen MVR Wert auszeichnen.

Es wurde nun überraschenderweise gefunden, dass eine Zusammensetzung zur Erzeugung einer thermoplastischen Formmasse, wobei die Zusammensetzung folgende Bestandteile enthält:
A) mindestens ein Polymer ausgewählt aus der Gruppe bestehend aus aromatischem Polycarbonat und aromatischem Polyestercarbonat
B) mindestens ein mit einem Anhydrid funktionalisiertes Ethylen-α-Olefin-Copolymer oder Ethylen-α-Olefin Terpolymer mit einem gewichtsgemittelten Molekulargewicht Mw von 50000 bis 500000 g/mol, bevorzugt 100000 bis 400000 g/mol und besonders bevorzugt von 150000 bis 350000 g/mol, jeweils bestimmt durch Hochtemperatur- Gelpermeationschromatographie mit ortho-Dichlorbenzol als Lösungsmittel gegen Polystyrol Standards,
C) mindestens einen mineralischen Füllstoff auf Basis von Talk
die vorteilhaften Eigenschaften zeigt.

Die Zusammensetzungen enthalten bevorzugt
40 bis 98,9 Gew.-%, weiter bevorzugt 50 bis 90 Gew.-%, besonders bevorzugt 60 bis 85 Gew.-% der Komponente A,
0,1 bis 10 Gew.-%, weiter bevorzugt 0,5 bis 9 Gew.-%, besonders bevorzugt 1 bis 8 Gew.-% der Komponente B,
1 bis 40 Gew.-%, bevorzugt 5 bis 35 Gew.-%, besonders bevorzugt 10 bis 25 Gew.-% der Komponente C und
0 bis 20 Gew.-%, weiter bevorzugt 0,1 bis 15 Gew.-%, besonders bevorzugt 0,2 bis 10 Gew.-% weitere polymere Bestandteile und/oder Polymeradditive als Komponente D.

In einer bevorzugten Ausführungsform bestehen die Zusammensetzungen zu mindestens 90 Gew.-% aus den Komponenten A bis D. Am meisten bevorzugt bestehen die Zusammensetzungen nur aus den Komponenten A bis D.

Es ist möglich, dass die Maleinsäureanhydrid-Gruppen der Komponente B mit der Komponente A und/oder mit anderen Komponenten der Zusammensetzung chemische Reaktionen eingehen.
Die Maleinsäureanhydrid-Gruppen können auch mit Feuchtigkeit oder anderen Verunreinigungen chemische Reaktionen eingehen.

Solche Reaktionen finden insbesondere in der Schmelze bei hohen Temperaturen, wie sie bei der Schmelzecompoundierung (z.B. in einen Extruder) und bei der Spritzgussverarbeitung herrschen, statt.
Dadurch wird der Anteil von Maleinsäureanhydrid-Gruppen reduziert. Im Rahmen der vorliegenden Patentanmeldung werden auch solche Formmassen als erfindungsgemäß verstanden, wie sie erhalten werden, wenn die Komponenten A, B, C und optional D physikalisch gemischt und einer Schmelzecompoundierung unterzogen werden.

### Komponente A

Polycarbonate im Sinne der vorliegenden Erfindung sind sowohl Homopolycarbonate als auch Copolycarbonate und/oder Polyestercarbonate; die Polycarbonate können in bekannter Weise linear oder verzweigt sein. Erfindungsgemäß können auch Mischungen von Polycarbonaten verwendet werden.

Die thermoplastischen Polycarbonate einschließlich der thermoplastischen, aromatischen Polyestercarbonate haben gewichtsgemittelte Molekulargewichte M_{w} bestimmt durch GPC (Gelpermeationschromatographie in Methylenchlorid mit Polycarbonat als Standard) von 15000 g/mol bis 50000 g/mol, vorzugsweise von 20000 g/mol bis 35000 g/mol, insbesondere von 23000 g/mol bis 33000 g/mol.

Ein Teil, bis zu 80 Mol-%, vorzugsweise von 20 Mol-% bis zu 50 Mol-%, der Carbonat-Gruppen in den erfindungsgemäß eingesetzten Polycarbonaten können durch aromatische Dicarbonsäureester-Gruppen ersetzt sein. Derartige Polycarbonate, die sowohl Säurereste der Kohlensäure als auch Säurereste von aromatischen Dicarbonsäuren in die Molekülkette eingebaut enthalten, werden als aromatische Polyestercarbonate bezeichnet. Sie werden im Rahmen der vorliegenden Erfindung unter dem Oberbegriff der thermoplastischen, aromatischen Polycarbonate subsumiert.

Die Herstellung der Polycarbonate erfolgt in bekannter Weise aus Diphenolen, Kohlensäurederivaten, gegebenenfalls Kettenabbrechern und gegebenenfalls Verzweigern, wobei zur Herstellung der Polyestercarbonate ein Teil der Kohlensäurederivate durch aromatische Dicarbonsäuren oder Derivate der Dicarbonsäuren ersetzt wird, und zwar je nach Maßgabe der in den aromatischen Polycarbonaten zu ersetzenden Carbonatstruktureinheiten durch aromatische Dicarbonsäureesterstruktureinheiten.

Für die Herstellung von Polycarbonaten geeignete Dihydroxyarylverbindungen sind solche der Formel (1)

HO-Z-OH (1),

in welcher
- Z: ein aromatischer Rest mit 6 bis 30 C-Atomen ist, der einen oder mehrere aromatische Kerne enthalten kann, substituiert sein kann und aliphatische oder cycloaliphatische Reste bzw. Alkylaryle oder Heteroatome als Brückenglieder enthalten kann.

Bevorzugt steht Z in Formel (1) für einen Rest der Formel (2) 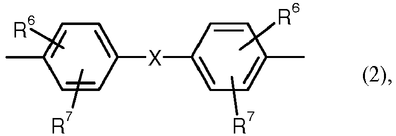 in der
- R⁶ und R⁷: unabhängig voneinander für H, C₁- bis C₁₈-Alkyl-, C₁- bis C₁₈-Alkoxy, Halogen wie Cl oder Br oder für jeweils gegebenenfalls substituiertes Aryl- oder Aralkyl, bevorzugt für H oder C₁- bis C₁₂-Alkyl, besonders bevorzugt für H oder C₁- bis C₈-Alkyl und ganz besonders bevorzugt für H oder Methyl stehen, und
- X: für eine Einfachbindung, -SO₂-, -CO-, -O-, -S-, C₁- bis C₆-Alkylen, C₂- bis C₅-Alkyliden oder C₅- bis C₆-Cycloalkyliden, welches mit C₁- bis C₆-Alkyl, vorzugsweise Methyl oder Ethyl, substituiert sein kann, ferner für C₆- bis C₁₂-Arylen, welches gegebenenfalls mit weiteren Heteroatome enthaltenden aromatischen Ringen kondensiert sein kann, steht.

Bevorzugt steht X für eine Einfachbindung, C₁- bis C₅-Alkylen, C₂- bis C₅-Alkyliden, C₅- bis C₆-Cycloalkyliden, -O-, -SO-, -CO-, -S-, -SO₂-
oder für einen Rest der Formel (2a)

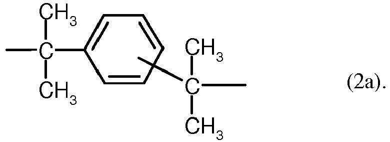

Beispiele für Dihydroxyarylverbindungen (Diphenole) sind: Dihydroxybenzole, Dihydroxydiphenyle, Bis-(hydroxyphenyl)-alkane, Bis-(hydroxyphenyl)-cycloalkane, Bis-(hydroxyphenyl)-aryle, Bis-(hydroxyphenyl)-ether, Bis-(hydroxyphenyl)-ketone, Bis-(hydroxyphenyl)-sulfide, Bis-(hydroxyphenyl)-sulfone, Bis-(hydroxyphenyl)-sulfoxide, 1,1'-Bis-(hydroxyphenyl)-diisopropylbenzole sowie deren kernalkylierte und kernhalogenierte Verbindungen.

Für die Herstellung der erfindungsgemäß zu verwendenden Polycarbonate geeignete Diphenole sind beispielsweise Hydrochinon, Resorcin, Dihydroxydiphenyl, Bis-(hydroxyphenyl)-alkane, Bis(hydroxyphenyl)-cycloalkane, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide, α,α'-Bis-(hydroxyphenyl)-diisopropylbenzole sowie deren alkylierte, kernalkylierte und kernhalogenierte Verbindungen.

Bevorzugte Diphenole sind 4,4'-Dihydroxydiphenyl, 2,2-Bis-(4-hydroxyphenyl)-1-phenylpropan, 1,1-Bis-(4-hydroxyphenyl)-phenylethan, 2,2-Bis-(4-hydroxyphenyl)propan, 2,4-Bis-(4-hydroxyphenyl)-2-methylbutan, 1,3-Bis-[2-(4-hydroxyphenyl)-2-propyl]benzol (Bisphenol M), 2,2-Bis-(3-methyl-4-hydroxyphenyl)-propan, Bis-(3,5-dimethyl-4-hydroxyphenyl)-methan, 2,2-Bis-(3,5-dimethyl-4-hydroxyphenyl)-propan, Bis-(3,5-dimethyl-4-hydroxyphenyl)-sulfon, 2,4-Bis-(3,5-dimethyl-4-hydroxyphenyl)-2-methylbutan, 1,3-Bis-[2-(3,5-dimethyl-4-hydroxyphenyl)-2-propyl]-benzol und 1,1-Bis-(4-hydroxyphenyl)-3,3,5-trimethylcyclohexan (Bisphenol TMC).

Besonders bevorzugte Diphenole sind 4,4'-Dihydroxydiphenyl, 1,1-Bis-(4-hydroxyphenyl)-phenyl-ethan, 2,2-Bis-(4-hydroxyphenyl)-propan (Bisphenol A), 2,2-Bis(3,5-dimethyl-4-hydroxyphenyl)-propan, 1,1-Bis-(4-hydroxyphenyl)-cyclohexan und 1,1-Bis-(4-hydroxyphenyl)-3,3,5-trimethylcyclohexan (Bisphenol TMC).
Insbesondere bevorzugt ist 2,2-Bis-(4-hydroxyphenyl)-propan (Bisphenol-A).

Diese und weitere geeignete Diphenole sind z.B. in US 2 999 835 A, 3 148 172 A, 2 991 273 A, 3 271 367 A, 4 982 014 A und 2 999 846 A, in den deutschen Offenlegungsschriften 1 570 703 A, 2 063 050 A, 2 036 052 A, 2 211 956 A und 3 832 396 A, der französischen Patentschrift 1 561 518 A1, in der Monographie "H. Schnell, Chemistry and Physics of Polycarbonates, Interscience Publishers, New York 1964, S. 28 ff.; S.102 ff.", und in "D.G. Legrand, J.T. Bendler, Handbook of Polycarbonate Science and Technology, Marcel Dekker New York 2000, S. 72ff." beschrieben.

Im Falle der Homopolycarbonate wird nur ein Diphenol eingesetzt, im Falle von Copolycarbonaten werden zwei oder mehr Diphenole eingesetzt. Die verwendeten Diphenole, wie auch alle anderen der Synthese zugesetzten Chemikalien und Hilfsstoffe, können mit den aus ihrer eigenen Synthese, Handhabung und Lagerung stammenden Verunreinigungen kontaminiert sein. Es ist jedoch wünschenswert, mit möglichst reinen Rohstoffen zu arbeiten.

Die zur Regelung des Molekulargewichtes benötigten monofunktionellen Kettenabbrecher, wie Phenole oder Alkylphenole, insbesondere Phenol, p-tert. Butylphenol, iso-Octylphenol, Cumylphenol, deren Chlorkohlensäureester oder Säurechloride von Monocarbonsäuren bzw. Gemische aus diesen Kettenabbrechern, werden entweder mit dem Bisphenolat bzw. den Bisphenolaten der Reaktion zugeführt oder aber zu jedem beliebigen Zeitpunkt der Synthese zugesetzt, solange im Reaktionsgemisch noch Phosgen oder Chlorkohlensäureendgruppen vorhanden sind, bzw. im Falle der Säurechloride und Chlorkohlensäureester als Kettenabbrecher, solange genügend phenolische Endgruppen des sich bildenden Polymers zur Verfügung stehen. Vorzugsweise werden der oder die Kettenabbrecher jedoch nach der Phosgenierung an einem Ort oder zu einem Zeitpunkt zugegeben, wenn kein Phosgen mehr vorliegt, aber der Katalysator noch nicht dosiert wurde, bzw. sie werden vor dem Katalysator, mit dem Katalysator zusammen oder parallel zudosiert.

In der gleichen Weise werden eventuell zu verwendende Verzweiger oder Verzweigermischungen der Synthese zugesetzt, üblicherweise jedoch vor den Kettenabbrechern. Üblicherweise werden Trisphenole, Quarterphenole oder Säurechloride von Tri- oder Tetracarbonsäuren verwendet oder auch Gemische der Polyphenole oder der Säurechloride.

Einige der als Verzweiger verwendbaren Verbindungen mit drei oder mehr als drei phenolischen Hydroxylgruppen sind beispielsweise Phloroglucin, 4,6-Dimethyl-2,4,6-tri-(4-hydroxyphenyl)-hepten-2, 4,6-Dimethyl-2,4,6-tri-(4-hydroxyphenyl)-heptan, 1,3,5-Tris-(4-hydroxyphenyl)-benzol, 1,1,1-Tri-(4-hydroxyphenyl)-ethan, Tris-(4-hydroxyphenyl)-phenylmethan, 2,2-Bis-[4,4-bis-(4-hydroxyphenyl)-cyclohexyl]-propan, 2,4-Bis-(4-hydroxyphenyl-isopropyl)-phenol, Tetra-(4-hydroxyphenyl) -methan.

Einige der sonstigen trifunktionellen Verbindungen sind 2,4-Dihydroxybenzoesäure, Trimesinsäure, Cyanurchlorid und 3,3-Bis-(3-methyl-4-hydroxyphenyl)-2-oxo-2,3-dihydroindol.

Bevorzugte Verzweiger sind 3,3-Bis-(3-methyl-4-hydroxyphenyl)-2-oxo-2,3-dihydroindol und 1,1,1-Tri-(4-hydroxyphenyl)-ethan.

Die Menge der gegebenenfalls einzusetzenden Verzweiger beträgt 0,05 Mol-% bis 2 Mol-%, bezogen wiederum auf Mole an jeweils eingesetzten Diphenolen.

Die Verzweiger können entweder mit den Diphenolen und den Kettenabbrechern in der wässrigen alkalischen Phase vorgelegt werden oder in einem organischen Lösungsmittel gelöst vor der Phosgenierung zugegeben werden.

Alle diese Maßnahmen zur Herstellung der Polycarbonate sind dem Fachmann geläufig.

Für die Herstellung der Polyestercarbonate geeignete aromatische Dicarbonsäuren sind beispielsweise Orthophthalsäure, Terephthalsäure, Isophthalsäure, tert-Butylisophthalsäure, 3,3'-Diphenyldicarbonsäure, 4,4'-Diphenyldicarbonsäure, 4,4-Benzophenondicarbonsäure, 3,4'-Benzophenondicarbonsäure, 4,4'-Diphenyletherdicarbonsäure, 4,4'-Diphenylsulfondicarbonsäure, 2,2-Bis-(4-carboxyphenyl)-propan, Trimethyl-3-phenylindan-4,5'-dicarbonsäure.

Von den aromatischen Dicarbonsäuren werden besonders bevorzugt die Terephthalsäure und/oder Isophthalsäure eingesetzt.

Derivate der Dicarbonsäuren sind die Dicarbonsäuredihalogenide und die Dicarbonsäuredialkylester, insbesondere die Dicarbonsäuredichloride und die Dicarbonsäuredimethylester.

Der Ersatz der Carbonatgruppen durch die aromatischen Dicarbonsäureestergruppen erfolgt im Wesentlichen stöchiometrisch und auch quantitativ, so dass das molare Verhältnis der Reaktionspartner sich auch im fertigen Polyestercarbonat wiederfindet. Der Einbau der aromatischen Dicarbonsäureestergruppen kann sowohl statistisch als auch blockweise erfolgen.

Bevorzugte Herstellungsweisen der erfindungsgemäß zu verwendenden Polycarbonate, einschließlich der Polyestercarbonate, sind das bekannte Grenzflächenverfahren und das bekannte Schmelzeumesterungsverfahren (vgl. z. B. WO 2004/063249 A1, WO 2001/05866 A1, WO 2000/105867, US 5,340,905 A, US 5,097,002 A, US-A 5,717,057 A).

Im ersten Fall dienen als Säurederivate vorzugsweise Phosgen und gegebenenfalls Dicarbonsäuredichloride, im letzteren Fall vorzugsweise Diphenylcarbonat und gegebenenfalls Dicarbonsäurediester. Katalysatoren, Lösungsmittel, Aufarbeitung, Reaktionsbedingungen etc. für die Polycarbonatherstellung bzw. Polyestercarbonatherstellung sind in beiden Fällen hinreichend beschrieben und bekannt.

In bevorzugter Ausführungsform wird als Komponente A nur aromatisches Polycarbonat eingesetzt, am meisten bevorzugt ein aromatisches Polycarbonat mit Bisphenol A als Diphenol-Einheit.

### Komponente B

Als Komponente B werden Ethylen -α-Olefin-Copolymere oder Terpolymere mit aufgepfropften Anhydridgruppen eingesetzt. Im Rahmen dieser Patentanmeldung wird die Komponente B auch als Ethylen -α-Olefin-Copolymer oder Terpolymer, das mit Anhydrid Gruppen funktionalisiert ist, bezeichnet.

Das Anhydrid ist vorzugsweise ausgewählt aus der Gruppe, die Maleinsäureanhydrid, Phthalsäureanhydrid, Furmarsäureanhydrid und Itaconsäureanhydrid sowie deren Mischungen umfasst. Besonders bevorzugt ist als Anhydrid Maleinsäureanhydrid.

Die Copolymere oder Terpolymere enthalten neben Ethylen als Comonomer (a-Olefin) vorzugsweise 1- Propen, 1-Buten, 1-Isobuten, 1-Penten, 1-Hexen, 1-Hepten, 1-Octen, 1-Nonen, 1-Decen, 1-Undecen, 1-Dodecen, 1-Tridecen, 1-Tetradecen, 1-Octadecen, 1-Nonadecen sowie deren Gemische.
Insbesondere wird ein Copolymer aus Ethylen und 1-Octen eingesetzt.

Die Herstellung der olefinischen Copolymere kann wie in US 5272236 A und US 5278272 A beschrieben erfolgen.
Die Pfropfung mit Anhydridgruppen ist beispielsweise in US 323691 A beschrieben.
Der α-Olefin Comonomergehalt beträgt bevorzugt 2 bis 40 Mol-%, bevorzugt 5 bis 35 Mol-% und besonders bevorzugt 10 bis 25 Mol-%, jeweils bezogen auf die Summe von Ethylen und dem Comonomer oder den Comonomeren

Bei den beschriebenen Ethylen-α-Olefin-Copolymeren oder Terpolymeren handelt es sich bevorzugt um statistische Copolymere.

Die Copolymere oder Terpolymere mit aufgepfropften Anhydridgruppen können zur Optimierung der elastomeren Eigenschaften einer Anvernetzung wie in WO 98/02489 beschrieben unterzogen werden.

Die Anteile von Ethylen und der Comonomere können durch ¹H und ¹³C NMR Spektroskopie in Trichlorethan als Lösemittel bestimmt werden.

Das anhydridmodifizierte Polymer ist bevorzugt durch nachfolgende Zusammensetzung charakterisiert:
B(1) 90,0 bis 99,99 Gew.-% weiter bevorzugt 97,0 bis 99,9 Gew.-% besonders bevorzugt 98,0 bis 99,7 Gew-%, ganz besonders bevorzugt 99,0 bis 99,5 Gew.-% Copolymer oder Terpolymer,
B(2) 0,01 bis 10,0 Gew-%, weiter bevorzugt 0,1 bis 3,0 Gew-% besonders bevorzugt 0,3 bis 2,0 Gew-%, ganz besonders bevorzugt 0,5 bis 1,0 Gew.-% Anhydrid.

In weiter bevorzugter Ausführungsform besteht die Hauptkette der Komponente B aus einem statistischen Copolymer aus Ethylen und 1-Octen Einheiten.

Das anhydridmodifizierte Copolymer oder Terpolymer hat ein gewichtsgemitteltes Molekulargewicht Mw von größer 50000 bis 500000 g/mol, bevorzugt 100000 bis 400000 g/mol und besonders bevorzugt von 150000 bis 350000 g/mol, jeweils bestimmt durch HT-GPC (Hochtemperatur- Gelpermeationschromatographie) mit ortho-Dichlorbenzol als Lösungsmittel gegen Polystyrol Standards.

Die Glasübergangstemperatur der bevorzugten Produkte beträgt maximal -50°C.
Die Glasübergangstemperatur wird mittels dynamischer Differenzkalorimetrie (DSC) gemäß der Norm DIN EN 61006 (Version von 2004) bei einer Heizrate von 10 K/min mit Definition der T_{g} als Mittelpunkttemperatur (Tangentenmethode) bestimmt.

### Komponente C

Die Zusammensetzungen enthalten als Komponente C mindestens einen mineralischen Füllstoff auf Basis von Talk.

Als mineralische Füllstoffe auf Basis von Talk im Sinne der Erfindung kommen alle teilchenförmigen Füllstoffe infrage, die der Fachmann mit Talk bzw. Talkum verbindet. Ebenfalls kommen alle teilchenförmigen Füllstoffe, die kommerziell angeboten werden und deren Produktbeschreibungen als charakterisierende Merkmale die Begriffe Talk bzw. Talkum enthalten, in Frage.

Bevorzugt sind mineralische Füllstoffe, die einen Gehalt an Talk nach DIN 55920 von größer 50 Gew.-%, bevorzugt größer 80 Gew.-%, besonders bevorzugt größer 95 Gew.-% und insbesondere bevorzugt größer 98 Gew.-%, bezogen auf die Gesamtmasse an Füllstoff aufweisen.

Unter Talk wird ein natürlich vorkommender oder synthetisch hergestellter Talk verstanden.

Reiner Talk hat die chemische Zusammensetzung 3 MgO · 4 SiO₂ ·H₂O und somit einen MgO-Gehalt von 31,9 Gew.-%, einen SiO₂-Gehalt von 63,4 Gew.-% und einen Gehalt an chemisch gebundenem Wasser von 4,8 Gew.-%. Es handelt sich um ein Silikat mit Schichtstruktur.

Natürlich vorkommende Talkmaterialien besitzen im allgemeinen nicht die oben aufgeführte Idealzusammensetzung, da sie durch partiellen Austausch des Magnesiums durch andere Elemente, durch partiellen Austausch von Silizium, durch z.B. Aluminium und/oder durch Verwachsungen mit anderen Mineralien wie z.B. Dolomit, Magnesit und Chlorit verunreinigt sind.

In vorteilhafter Weise enthält oder besteht bei der erfindungsgemäßen Zusammensetzung die Komponente E aus Talk (E2), wobei der Talk einen MgO-Gehalt von 28 bis 35 Gew.-%, insbesondere von 30,5 bis 32 Gew.-%, einen SiO₂-Gehalt von 55 bis 65 Gew.-% und einen Al₂O₃-Gehalt von kleiner 1 Gew.-% aufweist. Bei Zusammensetzungen mit einer solchen Komponente E hat sich gezeigt, dass insbesondere verarbeitungsbedingte Abbaureaktionen am Polycarbonat in geringerem Umfang stattfinden.

Vorteilhaft und insofern bevorzugt ist insbesondere auch der Einsatz des erfindungsgemäßen Talkes in Form von feinvermahlenen Typen mit einer mittleren Teilchengröße d₅₀ von 0,1 bis 20 µm, bevorzugt 0,2 bis 10 µm, weiter bevorzugt 0,3 bis 5 µm, noch weiter bevorzugt 0,3 bis 2,5 µm, und ganz besonders bevorzugt 0,4 bis 1,0 µm.

Die erfindungsgemäß einzusetzenden mineralischen Füllstoffe auf Basis von Talk haben bevorzugt eine obere Teilchen- bzw. Korngröße d₉₅ kleiner 10 µm, bevorzugt kleiner 7 µm, besonders bevorzugt kleiner 6 µm und insbesondere bevorzugt kleiner 4,5 µm. Die d₉₅- und d₅₀-Werte von den Füllstoffen werden nach Sedimentationsanalyse mit SEDIGRAPH D 5 000 nach ISO 13317-3 bestimmt.
Die mineralischen Füllstoffe auf Basis von Talk können optional oberflächenbehandelt sein, um eine bessere Ankopplung an die Polymermatrix zu erzielen. Sie können beispielsweise mit einem Haftvermittlersystem auf Basis funktionalisierter Silane ausgerüstet sein.

Das mittlere Aspektverhältnis (Durchmesser zu Dicke) der mineralischen Füllstoffe auf Basis von Talk liegt bevorzugt im Bereich 1 bis 100, besonders bevorzugt 2 bis 25 und insbesondere bevorzugt 5 bis 25, bestimmt an elektronenmikroskopischen Aufnahmen von Ultradünnschnitten der fertigen Produkte und Ausmessen einer repräsentativen Menge (ca. 50) von Füllstoffpartikeln. Die mineralischen Füllstoffe auf Basis von Talk können bedingt durch die Verarbeitung zur Formmasse bzw. zu Formkörpern in der Formmasse bzw. im Formkörper einen kleineren d₉₅- bzw. d₅₀-Wert aufweisen, als die ursprünglich eingesetzten Füllstoffe.

### Komponente D

Die Zusammensetzung kann als Komponente D ein oder mehrere weitere Additive enthalten, bevorzugt ausgewählt aus der Gruppe bestehend aus Flammschutzmitteln (z.B. organische Phosphor- oder Halogenverbindungen, insbesondere Bisphenol-A basierendes Oligophosphat), Antidrippingmitteln (beispielsweise Verbindungen der Substanzklassen der fluorierten Polyolefine, der Silikone sowie Aramidfasern), Flammschutzsynergisten (beispielsweise nanoskalige Metalloxide), Rauchinhibitoren (beispielsweise Zinkborat), Gleit- und Entformungsmitteln (beispielsweise Pentaerythrittetrastearat), Nukleiermitteln, Antistatika, Leitfähigkeitsadditiven, Stabilisatoren (z.B. Hydrolyse-, Wärmealterungs- und UV-Stabilisatoren sowie Umesterungsinhibitoren und Säure-/Basenquenchern), Fließfähigkeitspromotoren, Verträglichkeitsvermittlern, weiteren polymeren Bestandteilen (beispielsweise Polyestern, Vinyl(co)polymeren oder funktionellen Blendpartnern), von Komponente C verschiedenen Füll- und Verstärkungsstoffen (beispielsweise Karbonfasern, Glasfasern, Glimmer, Kaolin, CaCO₃) sowie Farbstoffen und Pigmenten (beispielsweise Titandioxid oder Eisenoxid).

In bevorzugter Ausführungsform ist die Zusammensetzung frei von Flammschutzmitteln, Antidrippingmitteln, Flammschutzsynergisten und Rauchinhibitoren.

In bevorzugter Ausführungsform enthält die Zusammensetzung mindestens ein Polymeradditiv ausgewählt aus der Gruppe bestehend aus Gleit- und Entformungsmitteln, Stabilisatoren, Fließfähigkeitspromotoren, Verträglichkeitsvermittlern, weiteren polymeren Bestandteilen, Farbstoffen und Pigmenten.

In bevorzugter Ausführungsform enthält die Zusammensetzung als Entformungsmittel Pentaerythrittetrastearat.

In bevorzugter Ausführungsform enthält die Zusammensetzung als Stabilisator mindestens einen Vertreter ausgewählt aus der Gruppe bestehend aus sterisch gehinderten Phenolen, organischen Phosphiten, Schwefel-basierten Co-Stabilisatoren und organischen sowie anorganischen Brönstedt-Säuren.
Als Brönstedt-Säure wird bevorzugt Zitronensäure eingesetzt.

In besonders bevorzugter Ausführungsform enthält die Zusammensetzung als Stabilisator mindestens einen Vertreter ausgewählt aus der Gruppe bestehend aus Octadecyl 3-(3,5-di-tert-butyl-4-hydroxyphenyl)propionat und Tris(2,4-di-tert-butylphenyl)phosphit.

In speziell bevorzugter Ausführungsform enthält die Zusammensetzung als Stabilisator eine Kombination aus Octadecyl 3-(3,5-di-tert-butyl-4-hydroxyphenyl)propionat und Tris(2,4-di-tert-butylphenyl)phosphit.

Besonders bevorzugte Zusammensetzungen enthalten als Entformungsmittel Pentaerythrittetrastearat, als Stabilisator mindestens einen Vertreter ausgewählt aus der Gruppe bestehend aus Octadecyl 3-(3,5-di-tert-butyl-4-hydroxyphenyl)propionat und Tris(2,4-di-tert-butylphenyl)phosphit sowie Zitronensäure.

### Herstellung der Formmassen und Formkörper

Aus den erfindungsgemäßen Zusammensetzungen können thermoplastische Formmassen hergestellt werden.
Die erfindungsgemäßen thermoplastischen Formmassen können beispielsweise hergestellt werden, indem man die jeweiligen Bestandteile der Zusammensetzungen in bekannter Weise vermischt und bei Temperaturen von bevorzugt 200°C bis 320°C, besonders bevorzugt bei 240 bis 300°C in üblichen Aggregaten wie beispielsweise Innenknetern, Extrudern und Doppelwellenschnecken schmelzcompoundiert und schmelzextrudiert. Dieser Prozess wird im Rahmen dieser Anmeldung allgemein als Compoundieren bezeichnet.
Dabei wird zumindest die Komponente A aufgeschmolzen, alle Bestandteile der Zusammensetzung ineinander dispergiert und/oder gelöst und in einem weiteren Schritt die erhaltene Schmelze durch Abkühlen wieder verfestigt und optional granuliert. Es ist möglich, die Schritte der Verfestigung und Granulierung in beliebiger Reihenfolge zueinander durchzuführen.
Unter Formmasse wird also das Produkt verstanden, das erhaltend wird, wenn die Bestandteile der Zusammensetzung schmelzcompoundiert und schmelzextrudiert werden.

Die Vermischung der einzelnen Bestandteile der Zusammensetzungen kann in bekannter Weise sowohl sukzessive als auch simultan erfolgen, und zwar sowohl bei etwa 20°C (Raumtemperatur) als auch bei höherer Temperatur. Das bedeutet, dass beispielsweise manche der Bestandteile über den Haupteinzug eines Extruders dosiert und die restlichen Bestandteile über einen Seiteneinzug, beispielsweise über einen Seitenextruder, später im Compoundierverfahren zugeführt werden können.

Gegenstand der Erfindung ist auch ein Verfahren zur Herstellung der erfindungsgemäßen Formmassen.

Dabei ist ein solches Verfahren bevorzugt, bei dem die Polycarbonat-Schmelze sowie die Additive über den Haupteinzug des Doppelschneckenextruders und der mineralische Füllstoff auf Basis von Talk über einen Seiteneinzug in eine Zone nach der Aufschmelzzone dosiert wird. Zur bestmöglichen Stabilisierung und Verarbeitbarkeit des Polycarbonates sollte die Dosierung des Füllstoffs zu einem möglichst späten Zeitpunkt während der Compoundierung erfolgen, ohne aber dabei eine ausreichende Dispergierung des Füllstoffs, aufgrund zur geringer Verweilzeit und Mischwirkung, zu verhindern.

Die erfindungsgemäßen Formmassen können zur Herstellung von Formkörpern jeder Art verwendet werden. Diese können beispielsweise durch Spritzguss, Extrusion und Blasformverfahren hergestellt werden. Eine weitere Form der Verarbeitung ist die Herstellung von Formkörpern durch Tiefziehen aus zuvor hergestellten Platten oder Folien.
Es ist auch möglich, die Bestandteile der Zusammensetzungen direkt in eine Spritzgussmaschine oder in ein Extrusionsaggregat zu dosieren und zu Formkörper zu verarbeiten.

Beispiele für solche Formkörper, die aus den erfindungsgemäßen Zusammensetzungen und Formmassen hergestellt werden können, sind Folien, Profile, Gehäuseteile jeder Art, z.B. für Haushaltsgeräte wie Saftpressen, Kaffeemaschinen, Mixer; für Büromaschinen wie Monitore, Flatscreens, Notebooks, Drucker, Kopierer; Platten, Rohre, Elektroinstallationskanäle, Fenster, Türen und weitere Profile für den Bausektor (Innenausbau und Außenanwendungen) sowie Elektro- und Elektronikteile wie Schalter, Stecker und Steckdosen und Bauteile für Nutzfahrzeuge, insbesondere für den Automobilbereich. Die erfindungsgemäßen Zusammensetzungen und Formmassen eignen sich auch zur Herstellung von folgenden Formkörpern oder Formteilen: Innenausbauteile für Schienenfahrzeuge, Schiffe, Flugzeuge, Busse und andere Kraftfahrzeuge, Karosserieteile für Kraftfahrzeuge, Gehäuse von Kleintransformatoren enthaltenden Elektrogeräten, Gehäuse für Geräte zur Informationsverarbeitung und -Übermittlung, Gehäuse und Verkleidung von medizinischen Geräten, Massagegeräte und Gehäuse dafür, Spielfahrzeuge für Kinder, flächige Wandelemente, Gehäuse für Sicherheitseinrichtungen, wärmeisolierte Transportbehältnisse, Formteile für Sanitär- und Badausrüstungen, Abdeckgitter für Lüfteröffnungen und Gehäuse für Gartengeräte.

Nachfolgend werden weitere Ausführungsformen 1 bis 28 der vorliegenden Erfindung beschrieben:
1. Zusammensetzung zur Erzeugung einer thermoplastischen Formmasse, wobei die Zusammensetzung die folgenden Bestandteile enthält oder hieraus besteht:
   A) mindestens ein Polymer ausgewählt aus der Gruppe bestehend aus aromatischem Polycarbonat, aromatischem Polyestercarbonat und Polyester,
   B) mindestens ein mit einem Anhydrid funktionalisiertes Ethylen-α-Olefin-Copolymer oder Ethylen-α-Olefin Terpolymer mit einem gewichtsgemittelten Molekulargewicht Mw von 50000 bis 500000 g/mol bestimmt durch Hochtemperatur-Gelpermeationschromatographie mit ortho-Dichlorbenzol als Lösungsmittel gegen Polystyrol Standards,
   C) ein mineralischer Füllstoff auf Basis von Talk.
2. Zusammensetzung gemäß Ausführungsform 1, wobei die Komponente B 2 bis 40 Mol-% α-Olefin -Einheiten und 60 bis 98 Mol-% Ethylen-Einheiten, bezogen auf die Summe von α-Olefin und Ethylen, aufweist.
3. Zusammensetzung gemäß Ausführungsform 1, wobei die Komponente B 5 bis 35 Mol-% α-Olefin -Einheiten und 65 bis 95 Mol-% Ethylen-Einheiten, bezogen auf die Summe von α-Olefin und Ethylen, aufweist.
4. Zusammensetzung gemäß Ausführungsform 1, wobei die Komponente B 10 bis 25 Mol-% α-Olefin -Einheiten und 75 bis 90 Mol-% Ethylen-Einheiten, bezogen auf die Summe von α-Olefin und Ethylen, aufweist.
5. Zusammensetzung gemäß einer der vorherigen Ausführungsformen, wobei die Komponente B einen Gehalt an Anhydrid von 0,01 bis 10,0 Gew.-% aufweist.
6. Zusammensetzung gemäß einer der vorherigen Ausführungsformen, wobei die Komponente B einen Gehalt an Anhydrid von 0,1 bis 3,0 Gew.-% aufweist.
7. Zusammensetzung gemäß einer der vorherigen Ausführungsformen, wobei die Komponente B einen Gehalt an Anhydrid von 0,3 bis 2,0 Gew.-% aufweist.
8. Zusammensetzung gemäß einer der vorherigen Ausführungsformen, wobei die Komponente B einen Gehalt an Anhydrid von 0,5 bis 1,0 Gew.-% aufweist.
9. Zusammensetzung gemäß einer der vorherigen Ausführungsformen, wobei die Komponente B ein mit Maleinsäureanhydrid funktionalisiertes Copolymer aus Ethylen und 1-Octen ist.
10. Zusammensetzung gemäß einer der vorherigen Ausführungsformen, wobei die Komponente B ein gewichtsgemitteltes Molekulargewicht Mw von 100000 bis 400000 g/mol aufweist.
11. Zusammensetzung gemäß einer der vorherigen Ausführungsformen, wobei die Komponente B ein gewichtsgemitteltes Molekulargewicht Mw von 150000 bis 350000 g/mol aufweist.
12. Zusammensetzung gemäß einer der vorherigen Ausführungsformen, wobei die Komponente A nur aus aromatischem Polycarbonat besteht.
13. Zusammensetzung gemäß einer der vorherigen Ausführungsformen, wobei als Komponente C Talk eingesetzt wird.
14. Zusammensetzung gemäß Ausführungsform 13, wobei der Talk eine mittlere Teilchengröße d₅₀ von 0,3 bis 5 µm aufweist.
15. Zusammensetzung gemäß Ausführungsform 14, wobei der Talk eine mittlere Teilchengröße d₅₀ von 0,3 bis 2,5 µm aufweist.
16. Zusammensetzung gemäß Ausführungsform 14, wobei der Talk eine mittlere Teilchengröße d₅₀ von 0,4 bis 1,0 µm aufweist.
17. Zusammensetzung gemäß einer der vorherigen Ausführungsformen, enthaltend oder bestehend aus
   40 bis 98,9 Gew.-% der Komponente A,
   0,1 bis 10 Gew.-% der Komponente B,
   1 bis 40 Gew.-% der Komponente C,
   0 bis 20 Gew.-% weitere polymere Bestandteile und/oder Polymeradditive als Komponente D.
18. Zusammensetzung gemäß einer der vorherigen Ausführungsformen, enthaltend oder bestehend aus
   50 bis 90 Gew.-% der Komponente A,
   0,5 bis 9 Gew.-% der Komponente B,
   5 bis 35 Gew.-% der Komponente C,
   0,1 bis 15 Gew.-% weitere polymere Bestandteile und/oder Polymeradditive als Komponente D.
19. Zusammensetzung gemäß einer der vorherigen Ausführungsformen, enthaltend oder bestehend aus
   60 bis 85 Gew.-% der Komponente A,
   1 bis 8 Gew.-% der Komponente B,
   10 bis 25 Gew.-% der Komponente C,
   0,2 bis 10 Gew.-% weitere polymere Bestandteile und/oder Polymeradditive als Komponente D.
20. Zusammensetzung gemäß einer der vorherigen Ausführungsformen, wobei die Komponente D mindestens einen Stabilisator ausgewählt aus der Gruppe der phenolischen Antioxidantien, Phosphite und Brönstedt-Säuren umfasst.
21. Verfahren zur Herstellung von Formmassen, enthaltend die Schritte (i), (ii) und optional (iii), wobei in einem ersten Schritt (i)
   Eine Zusammensetzung gemäß einer der Ausführungsformen 1 bis 20 durch Zuführung thermischer und/oder mechanischer Energie aufgeheizt, mindestens die Komponente A) dadurch aufgeschmolzen und alle eingesetzten Komponenten ineinander dispergiert und /oder gelöst werden,
   und
   in einem weiteren Schritt (ii)
      die aus Verfahrensschritt (i) resultierende Schmelze (ii) durch Abkühlen wieder verfestigt und (iii) optional granuliert wird,
   wobei die Verfahrensschritte (ii) und (iii) in beliebiger Reihenfolge zueinander durchgeführt werden können.
22. Verfahren gemäß Ausführungsform 21, wobei der Schritt (i) bei einer Temperatur von 200°C bis 320°C durchgeführt wird.
23. Verfahren gemäß Ausführungsform 21, wobei der Schritt (i) bei einer Temperatur von 240°C bis 300°C durchgeführt wird.
24. Verfahren gemäß einer der Ausführungsformen 21 bis 23, wobei das Verfahren mit einem Compoundieraggregat durchgeführt und die Komponente C getrennt von den anderen Komponenten zudosiert wird.
25. Verfahren gemäß Ausführungsform 24, wobei als Compoundieraggregat ein Doppelschneckenextruder verwendet wird und die Komponente C mit einem Seiteneinzug in eine Zone nach der Aufschmelzzone der anderen Komponenten eindosiert wird.
26. Formmasse, erhalten oder erhältlich nach einem Verfahren nach einer der Ausführungsformen 21 bis 25.
27. Verwendung einer Zusammensetzung nach einer der Ausführungsformen 1 bis 20 oder einer Formmasse nach Ausführungsform 26 zur Herstellung von Formkörpern.
28. Formkörper, erhältlich aus einer Zusammensetzung nach einer der Ausführungsformen 1 bis 20 oder aus einer Formmasse nach Ausführungsform 26.

### Beispiele

### Eingesetzte Komponenten

### Komponente A:

A1: Lineares Polycarbonat auf Basis Bisphenol-A mit einem gewichtsgemittelten Molekulargewicht Mw von 28000 g/mol bestimmt durch Gelpermeationschromatographie in Methylenchlorid mit Polycarbonat als Standard.

### Komponente B:

B1: Maleinsäureanhydrid (MAH) funktionalisiertes Ethylen 1-Octen Copolymer mit einem MAH Gehalt von 0,8 Gew-% und einem Verhältnis von Ethylen zu 1-Octen von 87 zu 13 Mol.-% sowie einem gewichtsgemittelten Molekulargewicht Mw von 200000 g/mol (Paraloid™ EXL 3808 D, Hersteller Dow Chemical).
B2: Maleinsäureanhydrid (MAH) funktionalisiertes Ethylen 1-Octen Copolymer mit einem MAH Gehalt von 0,4 Gew-% und einem Verhältnis von Ethylen zu 1-Octen von 83 zu 17 Mol.-% sowie einem gewichtsgemittelten Molekulargewicht Mw von 322000 g/mol (Paraloid™ EXL 3815, Hersteller Dow Chemical).
B3 (Vergleich): Ethylen-Propylen-Octen-Maleinsäureanhydrid-Copolymer mit einem Verhältnis Ethylen : Propylen : Octen 87:6:7 in Gew.-% (entspricht 94:4:2 in Mol.-%), CAS-Nr. 31069-12-2, mit einem Molekulargewicht Mw 5000 g/mol bestimmt durch GPC mit Polystyrol als Standard und einem Maleinsäureanhydridanteil 4,4% Gew.-%, HiWax™ 1105 A(Hersteller Mitsui Chemicals).
B4 (Vergleich): Kane ACE™ M732, Schlagzähmodifikator mit Kern-Schale Struktur und einem Butadienkautschuk als Kern (Hersteller Kaneka).

### Komponente C:

Talk, HTP Ultra™ 5C der Firma Imi Fabi mit einem MgO-Gehalt von 31,0 Gew.-%, einem SiO₂-Gehalt von 61,5 Gew.-% und einem Al₂O₃-Gehalt von 0,4 Gew.-%, mittlere Teilchengröße d₅₀ = 0,65 µm.

### Komponente D:

D1: : Thermostabilisator, Irganox™ B900 (Gemisch aus 80% Irgafos™ 168 (Tris(2,4-di-tert-butylphenyl)-phosphit) und 20% Irganox™ 1076 (2,6-Di-tert-butyl-4-(octadecanoxycarbonylethyl)-phenol); BASF (Ludwigshafen, Deutschland).
D2: Entformungsmittel Pentaerythrittetrastearat.
D3: Zitronensäure Reinheit ≥ 99,5% von Acros Organics (Geel, Belgien).

### Herstellung und Prüfung der erfindungsgemäßen Formmassen

Das Mischen der Komponenten erfolgte auf einem Zweiwellenextruder ZSE-27Maxx der Fa. Leistritz bei einer Massetemperatur von 260°C. Bei den Versuchen 5, 6, V7 und V8 wurde der Talk mit einem Seiteneinzug in eine Zone nach der Aufschmelzzone der anderen Komponenten eindosiert.
Die Formkörper wurden bei einer Massetemperatur von 300°C und einer Werkzeugtemperatur von 80°C auf einer Spritzgießmaschine Typ Arburg 270 E hergestellt.

Der MVR wird bestimmt gemäß ISO 1133 (Version von 2012) bei 300°C unter Verwendung einer Stempellast von 1,2 kg und einer Aufschmelzzeit von 5 Minuten.

Die Schlagzähigkeit nach Charpy wurde bei 23°C und -30°C gemäß ISO 179/1eU an jeweils zehn Prüfkörpern der Abmessung 80 mm x 10 mm x 4mm bestimmt.

Die Bruchdehnung und die nominelle Bruchdehnung wurden gemäß ISO 527 (Version von 1996) bei Raumtemperatur bestimmt.

Als weiteres Maß für die Duktilität im praxisrelevanten Schlag-/Crashversuch diente das Verhalten im multiaxialen Durchstoßversuch. Der Durchstoßversuch wurde bei 23 °C in Anlehnung an ISO 6603-2 (Version von 2000, in Anlehnung bedeutet, dass keine Sichtkontrolle der Probekörper durchgeführt wurde) an Prüfkörpern der Abmessung 60 mm x 60 mm x 2 mm durchgeführt.

**Tabelle 1: Zusammensetzungen und ihre Eigenschaften**

| Komponente (Gew.-%) | | 1 | 2 | V3 | V4 | 5 | 6 | V7 | V8 |
|---|---|---|---|---|---|---|---|---|---|
| A1 | | 74,40 | 74,40 | 74,40 | 74,40 | 74,40 | 74,40 | 74,40 | 74,40 |
| B1 | | 5,00 | | | | 5,00 | | | |
| B2 | | | 5,00 | | | | 5,00 | | |
| B3 | | | | 5,00 | | | | 5,00 | |
| B4 | | | | | 5,00 | | | | 5,00 |
| C | | 20,00 | 20,00 | 20,00 | 20,00 | 20,00 | 20,00 | 20,00 | 20,00 |
| D1 | | 0,10 | 0,10 | 0,10 | 0,10 | 0,10 | 0,10 | 0,10 | 0,10 |
| D2 | | 0,40 | 0,40 | 0,40 | 0,40 | 0,40 | 0,40 | 0,40 | 0,40 |
| D3 | | 0,10 | 0,10 | 0,10 | 0,10 | 0,10 | 0,10 | 0,10 | 0,10 |

| Dosierung Talk | | | | | | | | | |
|---|---|---|---|---|---|---|---|---|---|
| Haupteinzug (HE) oder Seiteneinzug (SE) | | HE | HE | HE | HE | SE | SE | SE | SE |

| Eigenschaften | | | | | | | | | |
|---|---|---|---|---|---|---|---|---|---|
| Charpy Schlagzähigkeit | | | | | | | | | |
| Anzahl gebrochen/ungebrochen (23°C) | | 0/10 | 0/10 | 0/10 | 10/0 | 0/10 | 0/10 | 3/7 | 10/0 |
| Mittelwert gebrochene Stäbe (23°C) | kJ/m² | n.g. | n.g. | n.g. | 107 | n.g. | n.g. | 187 / n.g. | 69 |
| Anzahl gebrochen/ungebrochen (-30°C) | | 10/0 | 10/0 | 10/0 | 9/0 | 10/0 | 10/0 | 10/0 | 10/0 |
| Mittelwert gebrochene Stäbe (-30°C) | kJ/m² | 214 | 230 | 231 | 90 | 209 | 190 | 179 | 75 |
| Durchstoß | | | | | | | | | |
| Maximalkraft (23°C) | N | 4452 | 4329 | 1100 | 3694 | 4276 | 4250 | 1201 | 3788 |
| Gesamtenergie (23°C) | J | 36 | 34 | 7 | 22 | 30 | 30 | 4 | 19 |
| Zugversuch | | | | | | | | | |
| Bruchdehnung | % | 14,5 | 3,1 | 2,8 | 3,0 | 88,3 | 86,7 | 15,6 | 6,7 |
| Nominelle Bruchdehnung | % | 8,3 | 3,3 | 3,1 | 3,5 | 60,3 | 58,5 | 8,7 | 5,0 |
| MVR (1,2kg - 5min, 300°C) | cm3/[10min] | 6,5 | 7,6 | 14,7 | 6,5 | 6,7 | 8,9 | 15,5 | 8,2 |

| | | | | | | | | | |
|---|---|---|---|---|---|---|---|---|---|
| n.g.: nicht gebrochen | | | | | | | | | |

Die Daten aus Tabelle 1 zeigen, dass sich aus den erfindungsgemäßen Zusammensetzungen 1, 2, 5 und 6 enthaltend die Komponenten B1 und B2 Formmassen mit guter Schmelzefließfähigkeit (MVR Wert nicht verschlechtert gegenüber V4) und Formkörper mit guter Zähigkeit im Schlagversuch, Durchstoßversuch und im Zugversuch erzeugen lassen. Wird anstatt der erfindungsgemäßen Komponente B1 bzw. B2 ein Pfropfpolymerisat mit Kern-Schale Struktur eingesetzt (B4), so ist sind Schlagzähigkeit sowie die Maximalkraft und die Gesamtenergie im Durchstoßversuch geringer. Bei Verwendung der elastischen Komponente B3 ist zwar die Kerbschlagzähigkeit ähnlich wie mit B1 oder B2, aber die Zähigkeit im Durchstoßversuch ist deutlich verschlechtert.
Besonders vorteilhaft sind beim Einsatz der Komponente B1 zudem die deutlich verbesserte Bruchdehnung und nominelle Bruchdehnung.
Weiterhin zeigen die Beispiele 5 und 6, dass die Dosierung des mineralischen Füllstoffs auf Basis Talk über einen Seiteneinzug eine deutliche Verbesserung der Bruchdehnung und nominellen Bruchdehnung bei den erfindungsgemäßen Zusammensetzungen bewirkt. Bei den Vergleichsbeispielen V7 und V8 wird zwar auch ein Vorteil der Dosierung über einen Seiteneinzug erkennbar, aber die Steigerungen der Bruchdehnung und nominellen Bruchdehnung sind deutlich geringer ausgeprägt.

## Patentansprüche

1. Zusammensetzung zur Erzeugung einer thermoplastischen Formmasse, wobei die Zusammensetzung die folgenden Bestandteile enthält oder hieraus besteht:
A) mindestens ein Polymer ausgewählt aus der Gruppe bestehend aus aromatischem Polycarbonat, aromatischem Polyestercarbonat und Polyester,
B) mindestens ein mit einem Anhydrid funktionalisiertes Ethylen-α-Olefin-Copolymer oder Ethylen-α-Olefin Terpolymer mit einem gewichtsgemittelten Molekulargewicht Mw von 50000 bis 500000 g/mol bestimmt durch Hochtemperatur-Gelpermeationschromatographie mit ortho-Dichlorbenzol als Lösungsmittel gegen Polystyrol Standards,
C) ein mineralischer Füllstoff auf Basis von Talk.

2. Zusammensetzung gemäß Anspruch 1, wobei die Komponente B 2 bis 40 Mol.-% α-Olefin - Einheiten und 60 bis 98 Mol.-% Ethylen-Einheiten, bezogen auf die Summe von α-Olefin und Ethylen, aufweist.

3. Zusammensetzung gemäß einem der vorherigen Ansprüche, wobei die Komponente B einen Gehalt an Anhydrid von 0,1 bis 3,0 Gew.-% aufweist.

4. Zusammensetzung gemäß einem der vorherigen Ansprüche, wobei die Komponente B ein mit Maleinsäureanhydrid funktionalisiertes Copolymer aus Ethylen und 1-Octen ist.

5. Zusammensetzung gemäß einem der vorherigen Ansprüche, wobei die Komponente B 10 bis 25 Mol-% 1-Octen-Einheiten und 75 bis 90 Mol-% Ethylen-Einheiten bezogen auf die Summe von 1-Octen und Ethylen aufweist.

6. Zusammensetzung gemäß einem der vorherigen Ansprüche, wobei die Komponente A nur aus aromatischem Polycarbonat besteht.

7. Zusammensetzung gemäß einem der vorherigen Ansprüche, wobei als Komponente C Talk eingesetzt wird.

8. Zusammensetzung gemäß einem der vorherigen Ansprüche, enthaltend oder bestehend aus
40 bis 98,9 Gew.-% der Komponente A,
0,1 bis 10 Gew.-% der Komponente B,
1 bis 40 Gew.-% der Komponente C,
0 bis 20 Gew.-% weitere polymere Bestandteile und/oder Polymeradditive als Komponente D.

9. Zusammensetzung gemäß einem der vorherigen Ansprüche, wobei die Komponente D mindestens einen Stabilisator ausgewählt aus der Gruppe der phenolischen Antioxidantien, Phosphite und Brönstedt-Säuren umfasst.

10. Verfahren zur Herstellung von Formmassen, enthaltend die Schritte (i), (ii) und optional (iii), wobei in einem ersten Schritt (i)
Eine Zusammensetzung gemäß einem der Ansprüche 1 bis 9
durch Zuführung thermischer und/oder mechanischer Energie aufgeheizt, mindestens die Komponente A) dadurch aufgeschmolzen und alle eingesetzten Komponenten ineinander dispergiert und /oder gelöst werden,
und
in einem weiteren Schritt (ii)
die aus Verfahrensschritt (i) resultierende Schmelze (ii) durch Abkühlen wieder verfestigt und (iii) optional granuliert wird,
wobei die Verfahrensschritte (ii) und (iii) in beliebiger Reihenfolge zueinander durchgeführt werden können.

11. Verfahren gemäß Anspruch 10, wobei das Verfahren mit einem Compoundieraggregat durchgeführt und die Komponente C getrennt von den anderen Komponenten zudosiert wird.

12. Verfahren gemäß Anspruch 11, wobei als Compoundieraggregat ein Doppelschneckenextruder verwendet wird und die Komponente C mit einem Seiteneinzug in eine Zone nach der Aufschmelzzone der anderen Komponenten eindosiert wird.

13. Formmasse, erhalten oder erhältlich nach einem Verfahren nach einem der Ansprüche 10 bis 12.

14. Verwendung einer Zusammensetzung nach einem der Ansprüche 1 bis 9 oder einer Formmasse nach Anspruch 13 zur Herstellung von Formkörpern.

15. Formkörper, erhältlich aus einer Zusammensetzung nach einem der Ansprüche 1 bis 9 oder aus einer Formmasse nach Anspruch 13.

## Claims

1. Composition for producing a thermoplastic moulding material, wherein the composition contains or consists of the following constituents:
A) at least one polymer selected from the group consisting of aromatic polycarbonate, aromatic polyestercarbonate and polyester,
B) at least one anhydride-functionalized ethylene-α-olefin copolymer or ethylene-α-olefin terpolymer having a weight-average molecular weight Mw of 50000 to 500000 g/mol determined by high-temperature gel permeation chromatography using ortho-dichlorobenzene as solvent against polystyrene standards,
C) a talc-based mineral filler.

2. Composition according to Claim 1, wherein the component B comprises 2 to 40 mol% of α-olefin units and 60 to 98 mol% of ethylene units based on the sum of α-olefin and ethylene.

3. Composition according to either of the preceding claims, wherein the component B has a content of anhydride of 0.1% to 3.0% by weight.

4. Composition according to any of the preceding claims, wherein the component B is a maleic anhydride-functionalized copolymer of ethylene and 1-octene.

5. Composition according to any of the preceding claims, wherein the component B comprises 10 to 25 mol% of 1-octene units and 75 to 90 mol% of ethylene units based on the sum of 1-octene and ethylene.

6. Composition according to any of the preceding claims, wherein the component A consists solely of aromatic polycarbonate.

7. Composition according to any of the preceding claims, wherein talc is employed as component C.

8. Composition according to any of the preceding claims, containing or consisting of
40% to 98.9% by weight of the component A,
0.1% to 10% by weight of the component B,
1% to 40% by weight of the component C,
0% to 20% by weight of further polymeric constituents and/or polymer additives as component D.

9. Composition according to any of the preceding claims, wherein the component D comprises at least one stabilizer selected from the group of the phenolic antioxidants, phosphites and Brønsted acids.

10. Process for producing moulding materials, containing the steps (i), (ii) and optionally (iii), wherein in a first step (i)
a composition according to any of Claims 1 to 9 is heated by introduction of thermal and/or mechanical energy, at least the component A) is thus melted and all employed components are dispersed and/or dissolved in one another
and
in a further step (ii)
the melt resulting from process step (i) is (ii) resolidified by cooling
and (iii) optionally pelletized,
wherein the process steps (ii) and (iii) may be performed in any desired sequence relative to one another.

11. Process according to Claim 10, wherein the process is performed with a compounding unit and the component C is added separately from the other components.

12. Process according to Claim 11, wherein the compounding unit used is a twin-screw extruder and the component C is added into a zone downstream of the melting zone for the other components via an ancillary intake.

13. Moulding material obtained or obtainable by a process according to any of Claims 10 to 12.

14. Use of a composition according to any of Claims 1 to 9 or of a moulding material according to Claim 13 for producing moulded articles.

15. Moulded article obtainable from a composition according to any of Claims 1 to 9 or from a moulding material according to Claim 13.

## Revendications

1. Composition pour la production d'une masse à mouler thermoplastique, la composition contenant les ingrédients suivants ou étant constituée de :
A) au moins un polymère choisi dans le groupe constitué par un polycarbonate aromatique, un polyestercarbonate aromatique et un polyester,
B) au moins un copolymère d'éthylène-α-oléfine ou terpolymère d'éthylène-α-oléfine, fonctionnalisé par un anhydride, doté d'un poids moléculaire moyen en poids Mw de 50 000 à 500 000 g/mole déterminé par chromatographie à perméation de gel à haute température avec de l'orthodichlorobenzène en tant que solvant par rapport à des références de polystyrène,
C) une charge minérale à base de talc.

2. Composition selon la revendication 1, le composant B présentant 2 à 40 % en moles de motifs de type α-oléfine et 60 à 98 % en moles de motifs de type éthylène, par rapport à la somme d'a-oléfine et d'éthylène.

3. Composition selon l'une quelconque des revendications précédentes, le composant B présentant une teneur en anhydride de 0, 1 à 3, 0 % en poids.

4. Composition selon l'une quelconque des revendications précédentes, le composant B étant un copolymère d'éthylène et de 1-octène, fonctionnalisé par l'anhydride de l'acide maléique.

5. Composition selon l'une quelconque des revendications précédentes, le composant B présentant 10 à 25 % en moles de motifs de type 1-octène et 75 à 90 % en moles de motifs de type éthylène, par rapport à la somme de 1-octène et d'éthylène.

6. Composition selon l'une quelconque des revendications précédentes, le composant A n'étant constitué que de polycarbonate aromatique.

7. Composition selon l'une quelconque des revendications précédentes, du talc étant utilisé en tant que composant C.

8. Composition selon l'une quelconque des revendications précédentes, contenant ou constituée par
40 à 98,9 % en poids du composant A,
0,1 à 10 % en poids du composant B,
1 à 40 % en poids du composant C,
0 à 20 % en poids d'autres ingrédients polymériques et/ou additifs de polymère en tant que composant D.

9. Composition selon l'une quelconque des revendications précédentes, le composant D comprenant au moins un stabilisateur choisi dans le groupe des antioxydants phénoliques, des phosphites et des acides de Brönsted.

10. Procédé pour la préparation de masses à mouler, contenant les étapes (i), (ii) et éventuellement (iii), dans lequel dans une première étape (i)
une composition selon l'une quelconque des revendications 1 à 9 est chauffée par l'apport d'énergie thermique et/ou mécanique, au moins le composant A) est par ce biais fondu et tous les composants utilisés sont dispersés et/ou dissous les uns dans les autres,
et
dans une étape supplémentaire (ii) la masse fondue (ii) résultant de l'étape de procédé (i) est à nouveau solidifiée par refroidissement et (iii) éventuellement granulée,
les étapes de procédé (ii) et (iii) pouvant être mises en œuvre selon un ordre quelconque l'une par rapport à l'autre.

11. Procédé selon la revendication 10, le procédé étant mis en œuvre avec un dispositif de compoundage et le composant C étant ajouté de manière séparée des autres composants.

12. Procédé selon la revendication 11, une extrudeuse à vis double étant utilisée en tant que dispositif de compoundage et le composant C étant ajouté aux autres composants avec une alimentation latérale dans une zone située après la zone de fusion.

13. Masse à mouler, obtenue ou pouvant être obtenue par un procédé selon l'une quelconque des revendications 10 à 12.

14. Utilisation d'une composition selon l'une quelconque des revendications 1 à 9 ou d'une masse à mouler selon la revendication 13 pour la préparation de corps moulés.

15. Corps moulé, pouvant être obtenu à partir d'une composition selon l'une quelconque des revendications 1 à 9 ou à partir d'une masse à mouler selon la revendication 13.
